# EUROPEAN PATENT SPECIFICATION

(11) **EP 2 162 638 B1**
(45) Date of publication and mention of the grant of the patent: **02.11.2011**
(21) Application number: 08776412.2
(22) Date of filing: 26.05.2008
(51) Int. Cl.: F16H 7/12

(54) **DEVICE FOR TENSIONING FLEXIBLE ANNULAR MEMBERS AND TENSIONING ASSEMBLY COMPRISING SUCH DEVICE**
VORRICHTUNG ZUR SPANNUNG FLEXIBLER RINGFÖRMIGER ELEMENTE UND SPANNUNGSANORDNUNG MIT EINER DERARTIGEN VORRICHTUNG
DISPOSITIF POUR METTRE SOUS TENSION DES ÉLÉMENTS ANNULAIRES SOUPLES ET ENSEMBLE DE MISE SOUS TENSION COMPRENANT UN TEL DISPOSITIF

(30) Priority: 25.05.2007 IT VI20070150
(43) Date of publication of application: 17.03.2010
(73) Proprietor: SIMEC S.P.A., 31030 Castello di Godego (Treviso) (IT)
(72) Inventor: STANGHERLIN, Ampelio, I-31030 Castello Di Godego (TV) (IT)
(74) Representative: Maroscia, Antonio
(86) International application number: PCT/IB2008/052062
(87) International publication number: WO 2008/146234

(56) References cited:
- EP-A- 0 097 065
- WO-A-95/18692
- WO-A-2004/101974
- GB-A- 1 279 752
- US-B1- 6 171 208

## Description

### Field of the invention

The present invention generally finds application in the field of machine tools for working stone, cement and the like and particularly relates to a device for tensioning flexible annular members wound around pulleys.

More particularly, the invention relates to a tensioning assembly comprising a plurality of said devices, for application to multi-wire or the like machines for cutting blocks of hard materials, such as stone, unto slabs.

### Background of the invention

Multi-wire machine tools for cutting stone blocks are known to generally comprise a load-bearing frame that supports one or more pairs of drums around which the cutting wires are disposed.

The latter should be adequately tensioned to ensure the required cutting accuracy and limit wear.

In prior art, wire tensioning is obtained through a first rough tensioning step, by transverse motion of the drum support shafts perpendicular to drums, and a later precision tensioning step.

In this latter step, special tensioning pulleys or rollers are used, generally of smaller diameter than the drums, which are guided for simultaneous operation on all the wires, to cause proper tensioning therof.

Nevertheless, these solutions suffer from the recognized drawback of not allowing independent tensioning of the individual cutting wires, which might lead to various serious problems.

Particularly, any minor difference in drum diameters or wire lengths can cause wires to slip onto the drum or roller surfaces, thereby increasing wear or causing undesired deformation.

In an attempt to overcome the above drawbacks, a number of different multi-wire machine solutions have been proposed, in which each cutting wire is tensioned independently of the others.

US 6,171,208, which constitutes the closest prior art, discloses a device for tensioning wires wound around pulleys in which each wire is wound around one pulley having an internal housing for the tensioning means.

These essentially consist of a hydraulic jack connected to the pulley for driving a sliding shoe that slides within the housing to cause translation of the axis of rotation of the pulley and hence tensioning of the wire.

While this solution solves the above problems, it still suffers from the recognized and apparent drawback that the tensioning means located within each tensioning pulley are hardly accessible.

Therefore, whenever maintenance, adjustment or control of the tensioning means are needed, the whole array of tensioning pulleys have to be removed, and this involves apparent difficulties in operation and long servicing times.

Furthermore, the use of a hydraulic jack does not ensure a sufficiently elastic response of the wire to the stresses generated during operation, due to the very little compressibility of the means being used.

### Summary of the invention

The object of the present invention is to overcome the above drawbacks, by providing a device for tensioning flexible annular members that is highly efficient and relatively cost-effective.

A particular object is to provide a tensioning device ensuring simple maintenance and allowing easy access to all of its mechanical parts.

A further object is to provide a tensioning device that has as prompt and efficient elastic response as possible to the stresses transmitted during operation by the flexible members around the pulley.

Another important object of the present invention is to provide a tensioning assembly for particular use on multi-wire cutting machines, which allows independently adjustable tensioning of the flexible members, while reducing their wear and maintaining their structural integrity even after a large number of operation cycles.

These and other objects, as better explained hereafter, are fulfilled by a device for tensioning a flexible annular member as claimed in claim 1, which comprises a central support hub designed to be fixed to the bearing frame of a machine, said hub having a substantially cylindrical outer surface with a first substantially stationary axis, a substantially toroidal flange with a central hole for the passage of said hub, said hole having a second central axis substantially parallel to the former and a diameter larger than the outside diameter of said hub, a pulley rotatably mounted to said flange to rotate about said second axis, said pulley (6) having a peripheral groove for receiving said flexible member, drive means operating on said pulley in a substantially radial direction to translate said second axis relative to said first axis.

The device is **characterized in that** the drive means are external to said hub and are operably coupled to said flange to translate it perpendicular to said first and second axes.

Advantageously, the drive means may include a tension member having one end attached to the flange and the opposite end connected to an actuator external to the hub.

Thanks to this particular configuration of the invention, the drive means are easily accessible by maintenance and/or adjustment operators, affording considerable time savings.

Preferably, the actuator may be a pneumatic cylinder having a stem connected to a free end of the tension member.

Thanks to this additional characteristics, the drive means are more cost-effective and easy to handle and ensure a more elastic response to the stresses transmitted by the flexible members during operation, thereby preserving their structural integrity.

In another aspect, the invention relates to a tensioning assembly, particularly for use with multi-wire machines for cutting stone blocks into slabs, which comprises a plurality of tensioning devices as defined in one or more of claims 1 to 9.

### Brief description of the drawings

Further characteristics and advantages of the invention will be more apparent upon reading of the detailed description of a preferred, non-exclusive embodiment of a device for tensioning flexible annular members and a tensioning apparatus according to the invention, which are described as a non-limiting example with the help of the annexed drawings, in which:
FIG. 1 is a front view of a device of the invention, certain details thereof being omitted, in a first operating position;
FIG. 2 is a front view of the device of FIG. 1 in a second operating position;
FIG. 3 is a broken away view of a device of the invention, as taken along the plane I-I of FIG. 1;
FIG. 4 is a partially broken away side view of a tensioning assembly of the invention;
FIG. 5 is a broken away side view of the assembly of FIG. 4;
FIG. 6 is a partial side view of a support hub which is part of the assembly of FIG. 4;

### Detailed description of a preferred embodiment

Referring to the above Figures, the tensioning device of the invention, generally designated by numeral 1 may be used with one or more flexible annular members F, particularly to one or more cutting wires in a multi-wire machine for cutting blocks of stone, cement, metal or the like materials.

A similar machine, not shown herein, is disclosed for example in the Italian patent application VI2006A000172 by the applicant hereof, and comprises a bearing frame with a pair of driving drums mounted thereto, around which a plurality of diamond wires are wound.

The machine may further comprise, as is known per se, a pair of return pulleys which define in combination with the drums and devices installed therein, closed loop path for the flexible members F to be tensioned.

Nevertheless, the device 1 may be also used in other types of machines, for example for precision tensioning of belts or similar flexible members F wound around drive flywheels in reciprocating gangsaws.

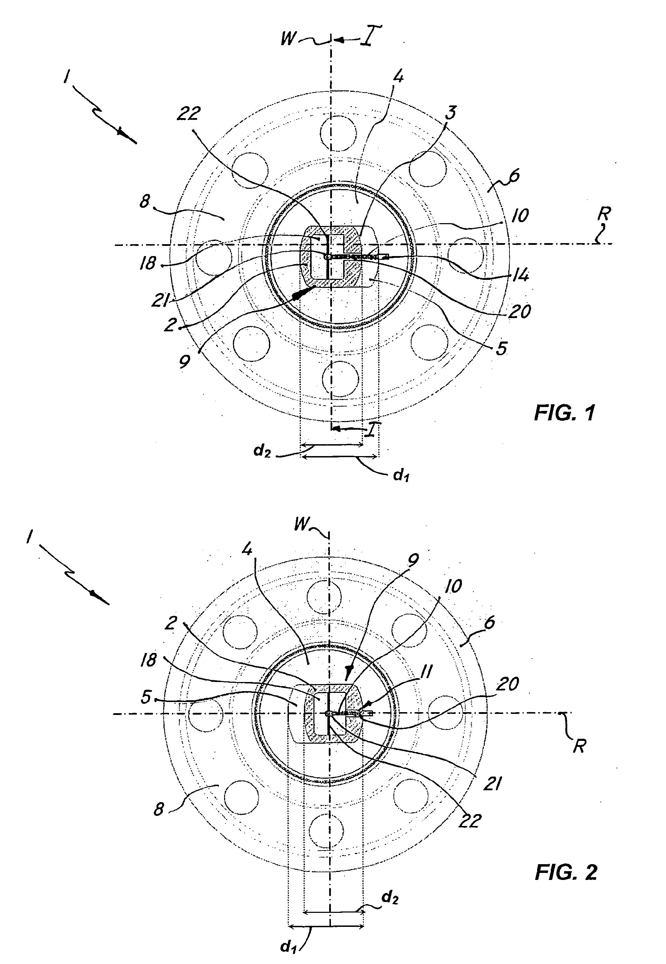

As shown in FIGS. 1 to 3, the device of the invention comprises a central support hub 2 designed to be anchored to the bearing frame of a machine and having a substantially cylindrical outer surface 3 with a first substantially stationary axis L.

The hub 2 supports a substantially disk-shaped flange 4 having a central hole 5 for the passage of the hub 2 and defining a second substantially central axis X, parallel to the first L.

The hole 5 has a diameter d₁ larger than the outside diameter d₂ of the hub 3 to allow mutual sliding of the flange 4 and the hub 2.

A pulley 6 is rotatably mounted to the flange 4, to rotate about the second axis X and further has an outer peripheral groove 7 for receiving at least one flexible annular member F.

The pulley 6 may be rotated about the second axis X by the flexible member F itself, which is driven, for instance, by one of the drive flywheels or drums of the machine with which the device 1 may be used.

Furthermore, a roller or plain bearing 8 may be interposed between the flange 4 and the pulley 6 to assist rotation of the latter in very little friction conditions.

The bearing 8 may be of special type, with a relatively large radius and a small axial extension, thereby allowing reduction of the overall axial size of the device 1.

The device 1 further comprises drive means 9 operating on the pulley 6 in a substantially radial direction R to translate the second axis X relative to the first stationary axis L, thereby allowing the pulley 6 to translate with the flange 4 and causing precision tensioning of the flexible member F therearound.

According to a peculiar feature of the present invention, the drive means 9 are external to the hub 2 and are operably coupled to the flange 4 to translate the latter perpendicular to the first axis L and the second axis X in a translation direction R.

According to a preferred, non exclusive embodiment of the present invention, the drive means 9 may include a tension member 10 having one end 11 attached to the flange 4 and the opposite end 12 connected to an actuator 13 external to the hub 2.

As more clearly shown in FIG. 1 and FIG. 2, the tension member may be attached to the flange 4 using a dowel 14 or similar fastener stably fitted in a suitable receptacle formed in the inner periphery of the flange 4.

Advantageously, the actuator 13 may be a pneumatic cylinder having a stem 15 connected to the outer end 12 of the tension member 10 and containing a gas, particularly air, at an operating pressure of 0 to 7 bar and preferably of about 3,5 bar.

Nonetheless it shall be understood that the actuator 13 may include any commonly available hydraulic, oleodynamic, or gas cylinder, without departure from the scope of the present invention.

The actuator 13 may also be of the electric type or an electrically driven reel for the tension member 10 to be wound therearound.

Nonetheless, the use of air will provide as prompt an elastic response as possible by the pulley 6 to the stresses transmitted by the flexible member F during operation, with apparent advantages in terms of reduced wear of the flexible member F and preservation of its mechanical properties.

The pneumatic cylinder 13 can operate at normal operating pressures and allow simpler handling with reduced maintenance costs, thereby involving overall cost savings.

The tension member 10 may be connected to the actuator 13 in a per-se known manner, such as by a nut or pin 16 fixed to the end of the tension member 10 and fitted onto the stem 15 of the actuator 13.

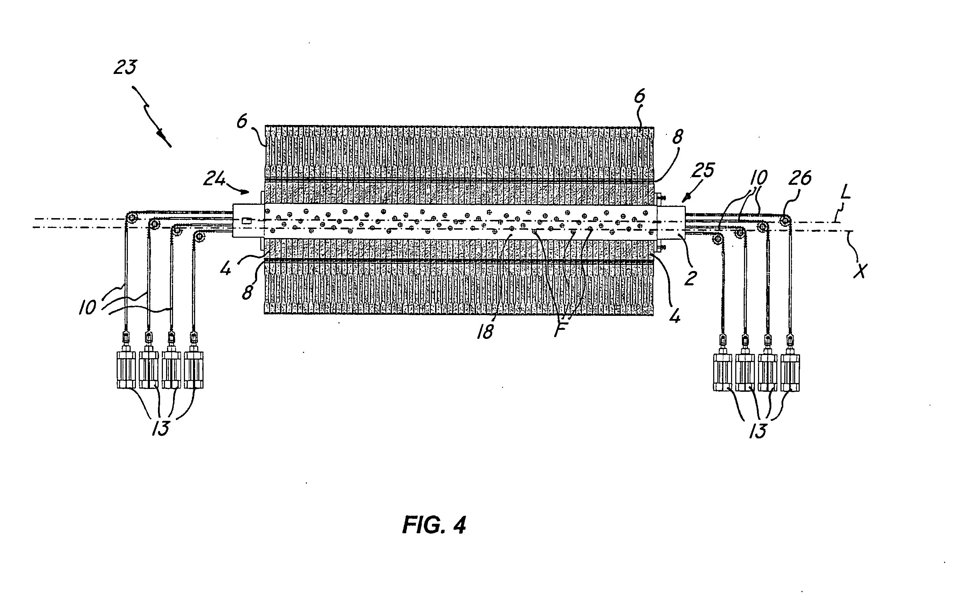

The tension member 10 may include a first section 17, connected to the stem 15 of the actuator 13, fitting into the central cavity 18 of the hub in a predetermined direction Z, possibly with a return roller 26 interposed therebetween, as shown in FIG. 4.

The tension member 10 may include a second section 19 connected to the flange 4 and coming out of the central cavity 18 of the hub 2 through a substantially radial passage 20 formed on the periphery of the hub 2.

Also, the tension member 10 may interact with a return element 21 held within the hub 2, for example in its central cavity 18 as shown in the figures, or even within the radial passage 20.

According to a preferred configuration, the return element 21 may be a roller having a substantially rough drive surface with a predetermined coefficient of friction sufficient to drive the tension member 10, or may have a pinion configuration, as shown in the figures, to mesh with a corresponding chain-type tension member 10.

The roller or pinion 21 may be idly mounted to rotate about a third axis of rotation W which is substantially orthogonal both to the second axis of rotation X and to the radial translation direction R of the flange 4 and is defined by a pin 22 stably housed in the hub 2, the roller or pinion 21 being idly mounted thereto.

In this configuration the tension member 10 that is partially wound around the roller or pinion 21 may be flexible, for example selected from the group comprising chains, belts, wires of metal materials or alloys, resin or composite materials. Therefore, the tension member 10 may operate in the pull direction only and not in the push direction, wherefore precision tensioning of the flexible member F can only occur in one direction.

In an alternative configuration, not shown, the return element 21 may be of the cam or square type, rotatably mounted about the third axis W, and the tension member 10 may be of rigid type, such as a rod, a tube, a lever or the like, operating in both pull and push directions, to allow precision tensioning of the flexible member F wound around the pulley 6 in both radial R directions.

Figures 4 to 6 show a tensioning assembly of the invention, generally designated by numeral 23, also for use with a machine tool, such as a multi-wire machine for cutting stone or the like blocks into slabs, which is composed of a plurality of tensioning devices 1 as described above.

Reference will be made herein to one device 1 of the assembly 23, and it shall be understood that all the parts of such device 1 are provided in substantially the same manner in all the other devices of the assembly 23.

The assembly 23 is composed of a predetermined number of tensioning pulleys 6 mounted to respective flanges 4, possibly with respective plain or roller bearings 8 interposed therebetween, and supported by respective central hollow hubs 2 in mutually restrained relationship and designed to be mounted to the bearing frame of a machine tool.

Advantageously, the flanges 4 may be mounted to a common central hub 2 defining a shaft with a stationary longitudinal hollow axis L, to be held to the bearing frame of a multi-wire machine, a reciprocating gangsaw or a similar machine.

Each of the tensioning devices 1 of the assembly 23 may include independent drive means 9 which have an actuator 13 for each flange 4, external to the central cavity 18 of the common hub 2 and connected to the respective flange 4 via a tensioning member 10.

The tension members 10 may be all of flexible type, all of rigid type or partly flexible and partly rigid, to allow operation in pull and/or push directions on all the pulleys 6 or part of them.

The independent drive means 9 may include a return element 21 for each of the flanges 4, such as a roller, a pinion, a cam or the like, interacting with a respective tension member 10.

The return elements 21 may be held within the central cavity 18 of the common hub 2 and be idly mounted to rotate about respective third axes of rotation W substantially transverse with the longitudinal hollow axis L.

Furthermore, the central hub 2 may include a plurality of passages 20 for respective tension members 10 extending in substantially radial directions and in axially offset positions.

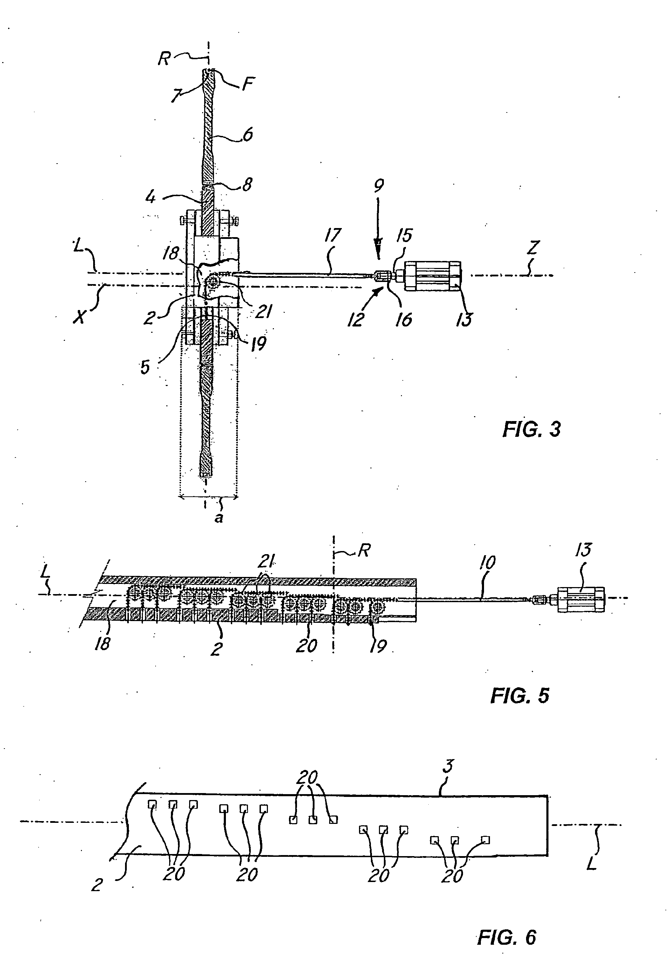

FIG. 5 is a sectional view of a portion of the common hub 2 that contains the return pinions with respective tension chains 10 wound therearound, only part of the latter being shown herein, which are connected to respective actuators 13 external to the hub 2, only part of them being shown herein, although it shall be understood that all the other tension members 10 may be connected to corresponding actuators 13 in a substantially identical manner.

Nevertheless, the actuators 13 may be provided in smaller numbers than the tension members 10, one or more actuators 13 being possibly connected to more than one tension member 10.

Advantageously, the radial passages 20 may be formed on the outer lateral surface 3 of the hub 2 in respectively offset angular positions, as more clearly shown in FIG. 6.

This allows optimal utilization of the space defined by the central cavity 18 of the support hub 2, allowing accommodation of many return elements 21 and use of many flexible members F.

For example, the pulleys 6 at the opposite longitudinal ends 24, 25 of the hub 2 may have respective radial passages 20 arranged at about 180° from each other, to define an array of tensioning devices 1 whose tension members 10 come out of the right side of the hub 2 and an array of devices 1 having tension members 10 coming out of the left side of the hub 2.

The above disclosure clearly shows that the invention fulfills the intended objects and particularly meets the requirement of providing a device for tensioning flexible annular members F wound around pulleys 6 that is easily adjustable and allows simple access to all of its critical mechanical parts.

Thanks to the particular selection of the drive means 9, and particularly to the use of pneumatic actuators 13, the device and assembly of the invention will have a sufficiently elastic behavior to ensure integrity of the flexible members F even after many operating cycles.

The device and assembly of the invention are susceptible to a number of changes or variants, within the inventive concept disclosed in the appended claims. All the details thereof may be replaced by other technically equivalent parts, and the materials may vary depending on different needs, without departure from the scope of the invention.

While the device and assembly have been described with particular reference to the accompanying figures, the numerals referred to in the disclosure and claims are only used for the sake of a better intelligibility of the invention and shall not be intended to limit the claimed scope in any manner.

## Claims

1. A machine for cutting blocks of stone or the like, comprising:
- a bearing frame with a pair of driving drums mounted thereto;
- at least one flexible annular member (F) wound around said drums;
- a tensioning device for use with said flexible annular member (F), which device comprises:
- a central support hub (2) anchored to said bearing frame, said hub (2) having a substantially cylindrical outer surface (3) with a first substantially stationary axis (L),
- a substantially disk-shaped flange (4) with a central hole (5) for the passage of said hub (2), said hole (5) having a second central axis (X) substantially parallel to said first axis (L) and a diameter (d₁) larger than the outside diameter (d₂) of said hub (2),
- a pulley (6) rotatably mounted to said flange (4), to rotate about said second axis (X), said pulley (6) having a peripheral groove (7) for receiving said flexible member (F),
- drive means (9) operating on said pulley (6) in a substantially radial direction (R) to translate said second axis (X) relative to said first stationary axis (L);
wherein said drive means (9) are external to said hub, **characterized in that** said drive means comprise an actuator (13) external to said hub (2);
said drive means (9) further comprises a tension member (10) having one end (11) attached to said flange (4) and the opposite end (12) connected to said actuator (13) to translate said flange (4) perpendicular to said first (L) and said second (X) axes.

2. A machine as claimed in claim 1, **characterized in that** said hub (2) has a substantially axial central cavity (18), and a substantially radial peripheral passage (20) for said tension member (10).

3. A machine as claimed in claim 2, **characterized in that** said drive means (9) include a return element (21) interacting with said tension member (10) and held within said hub (2).

4. A machine as claimed in claim 3, **characterized in that** said return element (21) is a roller or pinion that is idly mounted on a third axis of rotation (W) which is substantially orthogonal both to said second axis of rotation (X) and said radial translation direction (R) of said flange (4).

5. A machine as claimed in claim 4, **characterized in that** said tension member (10) is partially wound around said roller or pinion (21) and defines a first section (17), fitting into said central cavity (18) and connected to said actuator (13) and a second section (19) connected to said flange (4) coming out of said central cavity (18) through said radial passage (20).

6. A machine as claimed in claim 5, **characterized in that** said tension member (10) is flexible and selected from the group comprising chains, belts, wires.

7. A machine as claimed in claim 3, **characterized in that** said tension member (10) is rigid and selected from the group comprising rods, tubes, levers.

8. A machine as claimed in any of the preceding claims, **characterized in that** said actuator (13) is a pneumatic cylinder having a movable stem (15) connected to a free end (12) of said tension member (10).

9. A machine, as claimed in any of the preceding claims, **characterized in that** it comprises a plurality of said tensioning devices.

10. A machine as claimed in claim 9, **characterized in that** it has a common central hub (2) defining a longitudinal hollow axis (L), having mounted thereto respective flanges (4) and pulleys (6) of said tensioning devices (1), for supporting corresponding flexible annular members (F).

11. A machine as claimed in claim 10, **characterized in that** each of said tensioning devices (1) includes drive means (9) which are independent to each other and having an actuator (13) for each flange (9), external to the central cavity (18) of said hub (2) and connected to the respective flange (4) via a tensioning member (10).

12. A machine as claimed in claim 11, **characterized in that** each of said independent drive means (9) comprises a return roller or pinion (21) for a respective tension member (10), said rollers or pinions (21) being held in said central cavity (18) of said hub (2) and idly mounted on a respective third axes of rotation (W) substantially transverse to said hollow longitudinal axis (L).

13. A machine as claimed in claim 11 or 12, **characterized in that** said central hub (2) has a plurality of substantially radial and axially offset passages (20) for respective tension members (10), at least part of said radial passages (20) being formed on the lateral surface (3) of said hub (2) in respective offset angular positions.

## Patentansprüche

1. Maschine zum Schneiden von Steinblöcken oder Ähnlichem, die Folgendes aufweist:
- einen Lagerrahmen mit einem Paar von daran montierten Antriebstrommeln;
- zumindest ein flexibles ringförmiges Glied (F), welches um die Trommeln gewickelt ist;
- eine Spannvorrichtung zur Verwendung mit dem flexiblen ringförmigen Glied (F), wobei die Vorrichtung Folgendes aufweist:
- eine mittige Tragnabe (2) die an dem Lagerrahmen verankert ist, wobei die Nabe (2) eine im Wesentlichen zylindrische Außenfläche (3) mit einer ersten im Wesentlichen stationären Achse (L) hat,
- einen im Wesentlichen scheibenförmigen Flansch (4) mit einem mittigen Loch (5) für das Hindurchführen der Nabe (2), wobei das Loch (5) eine zweite Mittelachse (X) hat, die im Wesentlichen parallel zur ersten Achse (L) ist, und einen Durchmesser (d₁), der größer ist als der Außendurchmesser (d₂) der Nabe (2),
- eine Scheibe (6), die drehbar in dem Flansch (4) befestigt ist, um sich um die zweite Achse (X) zu drehen, wobei die Scheibe (6) eine umlaufende Nut (7) zur Aufnahme des flexiblen Gliedes (F) hat,
- Antriebsmittel (9), die auf die Scheibe (6) im Wesentlichen in radialer Richtung (R) wirken, um die zweite Achse (X) relativ zur ersten stationären Achse (L) geradlinig zu bewegen;
wobei die Antriebsmittel (9) außerhalb der Nabe gelegen sind, **dadurch gekennzeichnet, dass** die Antriebsmittel eine Betätigungsvorrichtung (13) außerhalb der Nabe (2) aufweisen;
wobei die Antriebsmittel (9) weiter ein Spannglied (10) aufweisen, wobei ein Ende (11) davon an dem Flansch (4) angebracht ist, und wobei das entgegengesetzte Ende (12) mit der Betätigungsvorrichtung (13) verbunden ist, um den Flansch (4) senkrecht zur ersten Achse (L) und zur zweiten Achse (X) geradlinig zu bewegen.

2. Maschine nach Anspruch 1, **dadurch gekennzeichnet, dass** die Nabe (2) einen im Wesentlichen mittigen axialen Hohlraum (18) und einen im Wesentlichen radialen Umfangsdurchlass (20) für das Spannglied (10) hat.

3. Maschine nach Anspruch 2, **dadurch gekennzeichnet, dass** die Antriebsmittel (9) ein Rückstellelement (21) aufweisen, welches mit dem Spannglied (10) zusammenwirkt und in der Nabe (2) gehalten wird.

4. Maschine nach Anspruch 3, **dadurch gekennzeichnet, dass** das Rückstellelement (21) eine Walze oder ein Ritzel ist, die bzw. das leerlaufend auf einer dritten Drehachse (W) montiert ist, welche im Wesentlichen senkrecht zu sowohl der zweiten Drehachse (X) als auch der radialen Translationsrichtung (R) des Flansches (4) ist.

5. Maschine nach Anspruch 4, **dadurch gekennzeichnet, dass** das Spannglied (10) teilweise um die Walze oder das Ritzel (21) gewickelt ist und einen ersten Abschnitt (17) definiert, in den mittigen Hohlraum (18) passt und mit der Betätigungsvorrichtung (13) und einem zweiten Abschnitt (19) verbunden ist, der mit dem Flansch (4) verbunden ist, der aus dem mittigen Hohlraum (18) durch den radialen Durchlass (20) kommt.

6. Maschine nach Anspruch 5, **dadurch gekennzeichnet, dass** das Spannglied (10) flexibel ist und aus der Gruppe ausgewählt ist, die Ketten, Riemen und Drähte aufweist.

7. Maschine nach Anspruch 3, **dadurch gekennzeichnet, dass** das Spannglied (10) starr ist und aus der Gruppe ausgewählt ist, die aus Stangen, Rohren und Hebeln besteht.

8. Maschine nach einem der vorhergehenden Ansprüche, **dadurch gekennzeichnet, dass** die Betätigungsvorrichtung (13) ein Pneumatikzylinder ist, der einen bewegbaren Schaft (15) hat, der mit einem freien Ende (12) des Spanngliedes (10) verbunden ist.

9. Maschine nach einem der vorhergehenden Ansprüche, **dadurch gekennzeichnet, dass** sie eine Vielzahl der Spannvorrichtungen aufweist.

10. Maschine nach Anspruch 9, **dadurch gekennzeichnet, dass** sie eine gemeinsame mittige Nabe (2) hat, die eine längsverlaufende hohle Achse (L) definiert, an der jeweilige Flansche (4) und Scheiben (6) der Spannvorrichtungen (1) befestigt sind, um entsprechend flexible ringförmige Glieder (F) zu tragen.

11. Maschine nach Anspruch 10, **dadurch gekennzeichnet, dass** jede der Spannvorrichtungen (1) Antriebsmittel (9) aufweist, die unabhängig voneinander sind, und eine Betätigungsvorrichtung (13) für jeden Flansch (9) außerhalb des mittigen Hohlraums (18) der Nabe (2) hat, die mit dem jeweiligen Flansch (4) über ein Spannglied (10) verbunden ist.

12. Maschine nach Anspruch 11, **dadurch gekennzeichnet, dass** jedes der unabhängigen Antriebsmittel (9) eine Rückstellwalze oder ein Rückstellritzel (21) für ein jeweiliges Spannglied (10) aufweist, wobei die Walzen oder Ritzel (21) in einem mittigen Hohlraum (18) der Nabe (2) gehalten werden und leerlaufend auf jeweiligen dritten Drehachsen (W) montiert sind, die im Wesentlichen quer zu der hohlen Längsachse (L) sind.

13. Maschine nach Anspruch 11 oder 12, **dadurch gekennzeichnet, dass** die mittige Nabe (2) eine Vielzahl von im Wesentlichen radialen und axial versetzten Durchlässen (20) für jeweilige Spannglieder (10) hat, wobei zumindest ein Teil der radialen Durchlässe (20) auf der Seitenfläche (3) der Nabe (2) an jeweils versetzten Winkelpositionen ausgeformt sind.

## Revendications

1. Machine pour découper des blocs de pierre ou analogues, comprenant :
- un bâti porteur, sur lequel sont montés une paire de tambours de commande ;
- au moins un élément annulaire souple (F) enroulé autour desdits tambours ;
- un dispositif tendeur pour utilisation avec ledit élément annulaire souple (F), lequel dispositif comprend :
- un moyeu support central (2) ancré audit bâti porteur, ledit moyeu (2) ayant une surface extérieure (3) sensiblement cylindrique, avec un premier axe (L) sensiblement stationnaire,
- une flasque (4), essentiellement en forme de disque, comportant un trou central (5) pour le passage dudit moyeu (2), ledit trou (5) ayant un deuxième axe central (X) sensiblement parallèle audit premier axe (L) et un diamètre (d₁) supérieur au diamètre extérieur (d₂) dudit moyeu (2),
- une poulie (6) montée en rotation sur ladite flasque (4), pour tourner autour dudit deuxième axe (X), ladite poulie (6) ayant une gorge périphérique (7) destinée à recevoir ledit élément souple (F),
- des moyens de commande (9), agissant sur ladite poulie (6) dans une direction (R) sensiblement radiale, pour déplacer par translation ledit deuxième axe (X) par rapport audit premier axe stationnaire (L) ;
dans laquelle lesdits moyens de commande (9) sont extérieurs audit moyeu,
**caractérisée en ce que** lesdits moyens de commande comprennent un actionneur (13) extérieur audit moyeu (2) ; ledit moyen de commande (9) comprend en outre un élément tendeur (10) dont une extrémité (11) est fixée à ladite flasque (4) et dont l'extrémité opposée (12) est raccordée audit actionneur (13) pour déplacer par translation ladite flasque (4) perpendiculairement audit premier (L) et audit deuxième (X) axes.

2. Machine selon la revendication 1, **caractérisée en ce que** ledit moyeu (2) possède une cavité centrale (18) sensiblement axiale, et un passage périphérique (20) sensiblement radial pour ledit élément tendeur (10).

3. Machine selon la revendication 2, **caractérisée en ce que** lesdits moyens de commande (9) comprennent un élément de rappel (21) qui interagit avec ledit élément tendeur (10) et est maintenu à l'intérieur dudit moyeu (2).

4. Machine selon la revendication 3, **caractérisée en ce que** ledit élément de rappel (21) est un galet ou un pignon qui est monté librement sur un troisième axe de rotation (W), qui est sensiblement orthogonal tant audit deuxième axe de rotation (X) qu'à ladite direction de translation radiale (R) de ladite flasque (4).

5. Machine selon la revendication 4, **caractérisée en ce que** ledit élément tendeur (10) est partiellement enroulé autour dudit galet ou dudit pignon (21) et définit un premier tronçon (17), qui vient s'ajuster dans ladite cavité centrale (18) et est raccordé audit actionneur (13), et un deuxième tronçon (19) raccordé à ladite flasque (4), sortant de ladite cavité centrale (18) par ledit passage radial (20).

6. Machine selon la revendication 5, **caractérisée en ce que** ledit élément tendeur (10) est souple et est choisi dans le groupe comprenant les chaînes, les courroies, les fils métalliques.

7. Machine selon la revendication 3, **caractérisée en ce que** ledit élément tendeur (10) est rigide et est choisi dans le groupe comprenant les barres, les tubes et les leviers.

8. Machine selon l'une quelconque des revendications précédentes, **caractérisée en ce que** ledit actionneur (13) est un vérin pneumatique ayant une tige mobile (15) raccordée à une extrémité libre (12) dudit élément tendeur (10).

9. Machine selon l'une quelconque des revendications précédentes, **caractérisée en ce qu'**elle comprend une pluralité desdits dispositifs tendeurs.

10. Machine selon la revendication 9, **caractérisée en ce qu'**elle possède un moyeu central commun (2) définissant un axe creux longitudinal (L), sur lequel sont montées des flasques (4) et des poulies (6) respectives desdits dispositifs tendeurs (1), pour soutenir des éléments annulaires souples correspondants (F).

11. Machine selon la revendication 10, **caractérisée en ce que** chacun desdits dispositifs tendeurs (1) comprend des moyens de commande (9) qui sont indépendants l'un de l'autre, avec un actionneur (13) pour chaque flasque (9), extérieur à la cavité centrale (18) dudit moyeu (2), et raccordé à la flasque respective (4) par l'intermédiaire d'un élément tendeur (10).

12. Machine selon la revendication 11, **caractérisée en ce que** chacun desdits moyens de commande indépendants (9) comprend un galet ou un pignon de rappel (21) pour un élément tendeur respectif (10), lesdits galets ou pignons (21) étant maintenus dans ladite cavité centrale (18) dudit moyeu (2) et étant montés librement sur un troisième axe de rotation respectif (W), sensiblement transversal audit axe longitudinal creux (L).

13. Machine selon la revendication 11 ou 12, **caractérisée en ce que** ledit moyeu central (2) possède une pluralité de passages (20) essentiellement radiaux et axialement décalés, pour des éléments tendeurs respectifs (10), au moins une partie desdits passages radiaux (20) étant formés sur la surface latérale (3) dudit moyeu (2) sur des positions angulaires décalées respectives.
